# EUROPEAN PATENT APPLICATION

(11) **EP 1 862 851 A1**
(43) Date of publication of application: **05.12.2007**
(21) Application number: 07010804.8
(22) Date of filing: 31.05.2007
(51) Int. Cl.: G03B 21/20, H04N 5/74

(54) **Video projector**

(30) Priority: 01.06.2006 JP 2006153720
(71) Applicant: Funai Electric Co., Ltd., Daito-shi, Osaka 574-0013 (JP)
(72) Inventor: Ochi, Masaki, Daito-shi Osaka 574-0013 (JP)
(74) Representative: Grünecker, Kinkeldey, Stockmair & Schwanhäusser Anwaltssozietät

(57) **Abstract**

A video projector (1) comprises a lamp unit (2) having a metal halide lamp (2a) and a reflector (2b), a lamp case (11) containing the lamp unit (2), and a blower fan (12) which is mounted in front of the lamp case (11) and cools the lamp unit (2). The lamp case (11) has a partition wall (11c) which divides an inner space of the lamp case (11) into a first space (21) in proximity of a side face and a second space (22) which surrounds a reflector (2b). The partition wall (11c) blocks off an electromagnetic wave which is radiated from a rear face of the reflector (2b) to a side face of the lamp case (11) and suppresses a local temperature rise of the side face (11b) and an external wall (10a) of a housing (10).

## Description

The present invention relates to a video projector which expands and projects an image on a screen.

Conventionally, in a video projector used for expanding and projecting an image on a screen with using image data transmitted from a personal computer or the like, a lamp unit is often overheated in accordance with a light emission from a bulb, and moreover, a housing is locally overheated with electromagnetic waves of heat rays radiated from the lamp unit and so on. In order to avoid such overheat of the housing, a cooling fan is used in the video projector, conventionally.

A conventional video projector shown in Japanese Laid-Open Patent Publication No. 2004- 170541, for example, comprises a partition board and a guide board provided outside a lamp case containing a lamp unit, so that an air flow blown from a cooling air is separated in two ways of an airflow flowing into and heated by the lamp unit and an air flow flowing into a space between the lamp case and a housing, and thereby, restricting the temperature rise of the housing.

Another conventional video projector shown in Japanese Laid-Open Patent Publication No. 2003- 280101, for example, comprises a cooling fan provided in a lamp case and a partition board to partition inside the lamp case.

Still another conventional video projector shown in Japanese Laid-Open Patent Publication No. 2003- 43586, for example, uses a dust so as to guide an air flow blown from a cooling fan to an outside face of the lamp case to cool a lamp case.

However, in the video projector shown in 2004- 170541, a sufficient space is needed to provide the partition board and to flow the air through both sides of the partition board, so that the video projector cannot be downsized. It is also necessary to flow the air outside the lamp case separately from the air to cool the lamp unit directly, so that the high-powered cooling fan is necessary and thereby causes a high cost of production. Moreover, the inner side of the lamp unit (the bulb side) is not directly exposed to the air flow which is blown from the cooling fan, so that the area in proximity to the bulb may be overheated, and a temperature distribution in the lamp case becomes unequal.
Consequently, the temperature distribution in the lamp case should be taken into consideration in designing the video projector, and thus there is less of flexibility.

### DISCLOSURE OF THE INVENTION

The present invention is conceived to solve the problem described above, and an object of the present invention is to provide a video projector which can suppress a local temperature rise of an external wall of a housing and also can equalize a temperature distribution in a lamp case with a simple configuration at low cost.

The present invention is not limited to the configuration of the preferred embodiment described above, however, any composition is applicable as long as the partition wall 11c is provided to divide the first space 21 and the second space 22 in the lamp case 11. Moreover, various modifications are applicable to the present invention, and for example, the cooling fan to cool the lamp unit 2 is not limited to the blower fan 12.

A video projector in accordance with an aspect of the present invention comprises at least a lamp unit which emits a light used to project an image on a screen, a lamp case which contains the lamp unit, a blower fan which is mounted in front of the lamp case and cools the lamp unit, an image processor which forms an image with using image data inputted from an external apparatus, and projects the image to the screen, and a housing into which the lamp unit, the lamp case, the blower fan and the image processor are installed. The lamp case has a partition wall which divides an inner space of the lamp case into a first space in proximity of a side face and a second space which surrounds a reflector, and blocks off an electromagnetic wave which is radiated from a rear face of the reflector to a side face of the lamp case so as to suppress a local temperature rise of the side face and an external wall of the housing.

According to such a configuration, the electromagnetic waves such as hear rays which are radiated from the rear face of the reflector to the side face of the lamp case (hereinafter indicates the side face adjacent to the external wall of the housing) is blocked off with the partition wall mounted in the lamp case, so that the temperature rise of the side face of the lamp case can be suppressed. Moreover, although the partition wall is heated by the electromagnetic wave radiated from the rear face of the reflector, the air which is sent out from the blower fan flows between the partition wall and the side face of the lamp case, so that the air cools the partition wall and insulates the heat between the partition wall and the side face of the lamp case. The temperature rise of the side face of the lamp case is further suppressed, thus even when the side face of the lamp case is located adjacent to the external wall of the housing, the temperature rise of the external wall of the housing can be suppressed. Furthermore, the air current flowing in the first space and the air current flowing in the second space are divided by the partition wall, so that the respective spaces can be cooled separately, and the air for cooling can be flowed in from the first air inlet and the second air inlet independently. Consequently, the inside of the lamp case can be equally cooled depending on the heating value of the bulb, the capacity of the lamp case, and the size and shape of the reflector, thus the flexibility in designing the video projector can be enhanced.

In the above mentioned configuration, it is preferable that a cover member having a first air inlet which passes a part of the air flow toward the first space and a second air inlet which passes the rest of the air flow toward the second space is attached to an anterior portion of the lamp case.

According to such a configuration, the quantities of the air flows respectively flowing into the first space and the second space can be controlled according to heat capacities to be cooled.

Furthermore, it is preferable that a third space is formed between a front end of the reflector and the cover member in the lamp case, and the first space is adjacent to the external wall of the housing and in proximity of a side face of the lamp case is communicated to the third space.

According to such a configuration, the air flow blown from the blower fan flows into the first space formed between the partition wall and the side face of the lamp case through the third space formed between the front end of the reflector and the cover member, so that the air insulates the heat between the partition wall and the side face of the lamp case, so that the temperature rise of the side face of the lamp case is further suppressed, and thus, even when the side face of the lamp case is located adjacent to the external wall of the housing, the temperature rise of the external wall of the housing can be suppressed.

Still furthermore, it is preferable that the cover member has an air inlet facing the blower fan, and the first air inlet and the second air inlet are divided by a partition formed in the air inlet.

According to such a configuration, the air flow blown from the blower fan is effectively divided into two ways, so that the divided air flows can cool the first space, the second space and the third space in the lamp housing evenly.

While the novel features of the present invention are set forth in the appended claims, the present invention will be better understood from the following detailed description taken in conjunction with the drawings.

### BRIEF DESCRIPTION OF THE DRAWINGS

The present invention will be described below with reference to the annexed drawings. It is to be noted that all the drawings are shown for the purpose of illustrating the technical concept of the present invention or embodiments thereof, wherein:
FIG 1 is a block diagram showing a configuration of a video projector in accordance with a preferred embodiment of the present invention;
FIG 2 is a sectional side view showing a configuration of a lamp unit and its periphery in the video projector of FIG 1; and
FIG 3 is a sectional rear view showing the configuration of the lamp unit and its periphery in the video projector of FIG 1.

### DESCRIPTION OF THE PREFERRED EMBODIMENTS

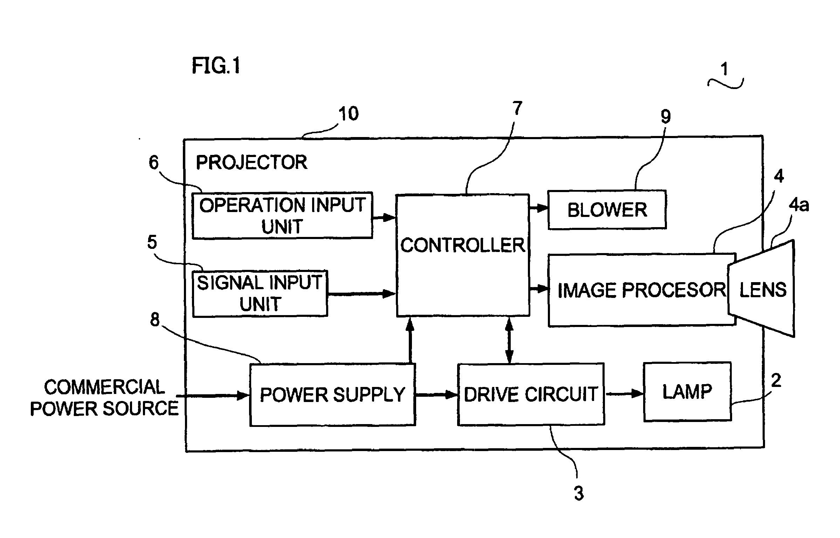

A video projector in accordance with a preferred embodiment of the present invention is described below with reference to the drawings. FIG 1 shows a video projector 1 of the present preferred embodiment.

The video projector 1 comprises a lamp unit 2 which has a metal halide lamp and a reflector, for example, a drive circuit 3 which provides an electrical power to the lamp unit 2, an image processor 4 which forms images with using a light emitted from the lamp unit 2, a signal input unit 5 to which image data are externally inputted, an operation input unit 6 which can be externally operated, a controller 7 which is comprised of a microcomputer, a memory, and so on to control various units of the video projector 1, a power supply 8 which is connected to an external commercial power source, a blower 9 which sends external air inside a housing 10 and discharges inside air which is in the housing 10 outside, the housing 10 which stores the units described above, and so on.

The video projector 1 is connected to an external personal computer or the like, for example, and forms an image with using image data which are inputted from the personal computer or the like through the signal input portion 5, and subsequently projects the image on an external screen or the like (not shown).

The image processor 4 includes a digital micromirror device (referred to as DMD hereinafter), and the DMD is controlled by the controller 7 based on the image data inputted to the image input portion 5 to form an image with using the image data. The image processor 4 further includes a color wheel which has a plurality of areas arranged on a circle through which a red light, a green light and blue light included in the light outputted from the lamp unit 2 sequentially pass to form a color image, a motor which rotates the color wheel, an actuation driver which drives the units in the image processor 4 under the control of the controller 7, and so on. The red, green, and blue lights in the light which is outputted from the lamp unit 2 sequentially pass through the color wheel. The DMD forms an image by reflecting appropriately the red, green, and blue lights, which sequentially pass through the color wheel, based on the image data. The image formed by the DMD is projected toward the external screen or the like through a lens 4a such as a zoom lens which has functions to expand the image to a desired size and focus the image on the screen.

The operation input unit 6 is comprised of manual operation buttons which are located on the housing 10 of the video projector 10, for example, so that a user can operate the buttons externally, switches which are switched through actions of the operation buttons, and so on. When the operation input unit 6 is operated externally, a signal or signals corresponding to the operation on the operation input unit 6 is/are inputted to the controller 7, and the controller 7 outputs control signals corresponding to the received signal or signals to the units of the video projector 1, and various actions are carried out. That is to say, the user can operate the actions of the video projector 1 by operating the operation input unit 6. The operation input unit 6 may be comprised of a light receiving portion which is located on the housing 10 and a remote controller which can be operated by the user, for example. In such case, the user can remotely operate the video projector 1 via infrared communication between the light receiving portion and the remote controller.

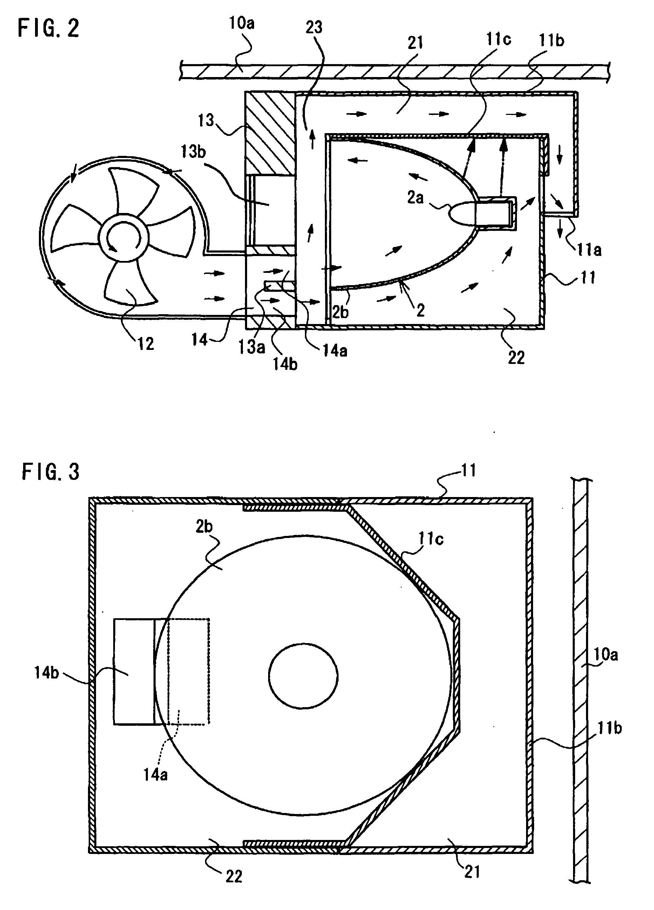

The blower 9 is composed of a cooling fan, a motor built in the cooling fan and a motor driver to drive the motor, and so on. As well as a cooling fan for sending in and out the air inside and outside the housing of the video projector 1, a blower fan 12 (refer to FIG 2) which locally cools the lamp init 2 is also provided to avoid an overheat of the lamp unit 2 and its periphery A drive voltage of each cooling fan is controlled by the controller 7 so that the temperature in the housing 10 of the video projector 1 which is projecting the image and the temperature of the lamp unit 2 are kept at a suitable temperature.

FIGs. 2 and 3 show the configuration of the lamp unit 2 and its periphery. The lamp unit 2 is comprised of a metal halide lamp (bulb) 2a which is a light source to project the image, a reflector 2b which reflects the light outputted from the metal halide lamp 2a, and so on. The lamp unit 2 is contained in a lamp case 11. The blower fan 12 is provided in front of the side face of the lamp case 11 to take in air in front of the lamp case 11 and to blow an air flow toward an inner face of the lamp case 11.

The lamp case 11 is disposed to face and to adjacent to an outer wall 10a of the housing 10. A cover member 13 having an air inlet 14 is attached to an anterior portion of the lamp case 11 to cover the opened area in the lamp case 11. Light beams directly emitted from the metal halide lamp 2a and light beams reflected by the reflector 2b pass a part 13b of the cover member 13. An air flow blown from the blower fan 12 passes the air inlet 14, and proceeds into an inside of the lamp case 11. A front face of the reflector 2b, which is provided in the lamp case 11, is opened so that the air flow can move along an inner face of the reflector 2b. The air inlet 14 has a first air inlet 14a which passes a part of the air flow toward the inner face of the reflector 2b and a second air inlet 14b which passes the rest of the air flow toward a rear face of the reflector 2b. The first air inlet 14a and the second air inlet 14b are divided by a partition 13a formed in the air inlet 14. In the lamp case 11, a third space 23 is formed between the front end of the reflector 2b and the cover member 13 in the lamp case 11, and a partition wall 11c is provided so as to divide an inner space of the lamp case 11 into a first space 21 which is adjacent to the external wall 10a and in proximity of a side face 1 1b, and a second space 22 which surrounds the reflector 2b. The first space 23 is communicated to the third space 23.

An air outlet 1 1a is further formed on the lamp case 11 at a portion near to the rear end of the reflector 2 so as to discharge the air flow which is blown from the blower fan 12 and passes the inner space of the lamp case 11 to outside the lamp case 11. The partition wall 11c blocks off an electromagnetic wave which is radiated from the rear face of the reflector 2b to the side face of the lamp case 11, and also divides the air flow which passes the first air inlet 14a to the first space 21 and the air flow which passes the second air inlet 14b to the second space 22.

As described above, according to the video projector 1 of the present preferred embodiment, the electromagnetic waves of heat rays which are radiated from the rear face of the reflector 2b to the side face 11b of the lamp case 11 is blocked off with the partition wall 11c provided in the lamp case 11, so that the temperature rise of the side face 11b of the lamp case 11 can be suppressed.

In addition, although the partition wall 11c is heated by the electromagnetic wave radiated from the rear face of the reflector 2b, a part of the air flow which is blown from the blower fan 12 flows between the partition wall 11c and the side face 11b, so that the air flow cools the partition wall 11c and insulates the heat between the partition wall 11c and the side face 11b. According to such configuration, the temperature rise of the side face 11b of the lamp case 11 is further suppressed, thus even when the side face 11b of the lamp case 11 is located adjacent to the external wall 10a of the housing 10, the temperature rise of the external wall 10a can be suppressed.

Furthermore, the air flow proceeds into the first space 21 and the air flow proceeds into the second space 22 are separated by the partition wall 11c, so that the respective spaces can be cooled separately, and the air flows for cooling the first space 21 and the second space 22 can be taken into from the first air inlet 14a and the second air inlet 14b independently Consequently, the inside of the lamp case 11 can be equally cooled depending on the heating value of the metal halide lamp 2a, the capacity of the lamp case 11, and the size and shape of the reflector 2b, thus the flexibility in designing the video projector 1 can be enhanced.

The present invention is not limited to the configuration of the preferred embodiment described above, however, any composition is applicable as long as the partition wall 11c is provided to divide the first space 21 and the second space 22 in the lamp case 11. Moreover, various modifications are applicable to the present invention, and for example, the cooling fan to cool the lamp unit 2 is not limited to the blower fan 12.

Since the present invention is not limited to the above mentioned configuration of the preferred embodiment, it is sufficient that the video projector comprises at least a lamp unit which emits a light used to project an image on a screen, a lamp case which contains the lamp unit, a blower fan which is mounted in front of the lamp case and cools the lamp unit, an image processor which forms an image with using image data inputted from an external apparatus, and projects the image to the screen, and a housing into which the lamp unit, the lamp case, the blower fan and the image processor are installed. The lamp case has a partition wall which divides an inner space of the lamp case into a first space in proximity of a side face and a second space which surrounds a reflector, and blocks off an electromagnetic wave which is radiated from a rear face of the reflector to a side face of the lamp case so as to suppress a local temperature rise of the side face and an external wall of the housing.

In the above mentioned configuration, it is preferable that a cover member having a first air inlet which passes a part of the air flow toward the inner face of the reflector and a second air inlet which passes the rest of the air flow toward a rear face of the reflector is attached to an anterior portion of the lamp case to cover the opened area in the lamp case.

Furthermore, it is preferable that a third space is formed between a front end of the reflector and the cover member in the lamp case, and the first space is adjacent to the external wall of the housing and in proximity of a side face of the lamp case is communicated to the third space.

Still furthermore, it is preferable that the cover member has an air inlet facing the blower fan, and the first air inlet and the second air inlet are divided by a partition formed in the air inlet.

## Claims

1. A video projector (1) comprising:
a lamp unit (2) which emits a light used to project an image on a screen;
a lamp case (11) which contains the lamp unit (2);
a blower fan (12) which is mounted in front of the lamp case (11) and cools the lamp unit (2);
an image processor (4) which forms an image with using image data inputted from an external apparatus, and projects the image to the screen; and
a housing (10) into which the lamp unit (2), the lamp case (11), the blower fan (12) and the image processor (4) are installed, wherein
the lamp case (11) has a partition wall (11c) which divides an inner space of the lamp case (11) into a first space (21) in proximity of a side face and a second space (22) which surrounds a reflector (2b), and blocks off an electromagnetic wave which is radiated from a rear face of the reflector (2b) to a side face of the lamp case (11) so as to suppress a local temperature rise of the side face (11b) and an external wall (10a) of the housing (10).

2. The video projector in accordance with claim 1, further comprising:
a cover member (13) having a first air inlet (14a) which passes a part of the air flow toward the first space (21) and a second air inlet (14b) which passes the rest of the air flow toward the second space (22) is attached to an anterior portion of the lamp case (11).

3. The video projector in accordance with claim 2, wherein
a third space (23) is formed between a front end of the reflector (2b) and the cover member (13) in the lamp case (11); and
the first space (21) is adjacent to the external wall (10a) of the housing (10) and in proximity of a side face (1 1b) of the lamp case (11) is communicated to the third space (23).

4. The video projector in accordance with claim 2, wherein
the cover member (13) has an air inlet (14) facing the blower fan (12) ; and
the first air inlet (14a) and the second air inlet (14b) are divided by a partition (13a) formed in the air inlet (14).
